# EUROPÄISCHE PATENTSCHRIFT

(11) **EP 0 823 835 B1**
(45) Veröffentlichungstag und Bekanntmachung des Hinweises auf die Patenterteilung: **13.12.2000**
(21) Anmeldenummer: 97922811.1
(22) Anmeldetag: 03.03.1997
(51) Int. Cl.: A01G 1/12, A47L 9/00

(54) **AUFNAHMEVORRICHTUNG FÜR ABFÄLLE**
WASTE COLLECTION DEVICE
DISPOSITIF COLLECTEUR DE DECHETS

(30) Priorität: 05.03.1996 DE 19608376
(43) Veröffentlichungstag der Anmeldung: 18.02.1998
(73) Patentinhaber: Multi-Cad Gmbh, 71394 Kernen (DE)
(72) Erfinder: BÜCHELE, Norbert, D-71394 Kernen (DE)
(86) Internationale Anmeldenummer: DE9700377
(87) Internationale Veröffentlichungsnummer: WO9732464

(56) Entgegenhaltungen:
- EP-A- 0 587 272
- EP-A- 0 657 587
- DE-U- 29 605 210
- US-A- 4 290 165
- US-A- 4 868 948

## Beschreibung

Die Erfindung betrifft eine Aufnahmevorrichtung für Abfälle aller Art im privaten und gewerblichen Bereich, welche die Merkmale des Oberbegriffs des Anspruches 1 aufweist.

Die bekannten Aufnahmevorrichtungen dieser Art sind nicht nur mit dem Nachteil behaftet, daß bei der Aufnahme von frischen, feuchten oder nassen Gartenabfällen, wie z.B. Gras oder Blättern, das das Radialgebläserad enthaltende Spiralturbinengehäuse im Bereich des Auswurfkanales schnell verstopft und dadurch zu ungewollten Betriebsunterbrechungen wegen einer notwendigen Reinigung führt, und daß bei sprödbrüchigem Sauggut, das von den Schaufeln des Radialgebläserades zerschlagen wird. Splitter durch den Fangsack hindurch geschleudert werden können, wodurch eine erhebliche Verletzungsgefahr für den Benutzer des Gerätes und sich in der Nähe des Gerätes befindende Personen vorhanden ist. Nachteilig ist vor allem die unzureichende Anpassungsfähigkeit an unterschiedliche Anforderungen.

Die Gefahr der Splitterbildung besteht zwar bei Injektor-Sauggeräten nicht. Diese Geräte haben aber eine ungenügende Häckselleistung, weil bei ihnen die Häckselung mittels eines am Saugkanalende angeordneten Trimmers erfolgt. Außerdem sind sie ebenfalls nur unzureichend an unterschiedliche Anforderungen anpaßbar.

Der Erfindung liegt die Aufgabe zugrunde, eine Aufnahmevorrichtung für Abfälle aller Art im privaten und gewerblichen Bereich zu schaffen, die eine gute Anpaßbarkeit an unterschiedliche Anforderungen sowie eine hohe Häckselleistung hat und häckselfähiges Gut ebenso wie andere Abfälle oder dergleichen störungsfrei aufzunehmen und in ein Sammelbehältnis zu fördern vermag. Diese Aufgabe löst eine Aufnahmevorrichtung mit den Merkmalen des Anspruches 1.

Dadurch, daß bei der erfindungsgemäßen Vorrichtung der durch die Auslaßöffnung bestimmte Ausströmbereich hinsichtlich seiner Querschnittsfläche und/oder seiner Strömungsrichtung veränderbar ist, können die Strömungsverhältnisse in hohem Maße an unterschiedliche Anforderungen angepaßt werden, wodurch sich auch eine höhere Effizienz der erfindungsgemäßen Vorrichtung bei unterschiedlichen Anforderungen erreichen läßt.

Zweckmäßigerweise ist wenigstens ein Steuerglied für die Einstellung der Querschnittsfläche und/oder Strömungsrichtung vorgesehen, das der Benutzer der Vorrichtung in die gewünschte Position bringen kann. Die Bewegung, welche das Steuerglied dabei ausführt, kann eine Translationsbewegung, eine Drehbewegung, eine Kippbewegung oder eine andere geeignete Bewegung sein oder aus einer Kombination mehrerer Bewegungsarten bestehen. Ferner kann das Steuerglied nicht nur so ausgebildet sein, daß es auf einen einzigen Ausströmbereich einwirkt. Seine Einwirkung kann sich auch auf wenigstens einen weiteren Ausströmbereich erstrecken. Beispielsweise kann es, wenn eine Auswurföffnung für gehäckseltes Material und eine Ausblasöffnung vorgesehen sind, durch die nur Luft austreten soll, wahlweise die eine oder die andere Öffnung freigeben oder verschließen.

Vorzugsweise ist als Steuerglied ein hohlzylindrischer Körper vorgesehen, der um eine Querachse kippbar gelagert ist und in seiner einen Kippstellung mit einem ersten Teil seiner Wand die Auswurföffnung und in seiner anderen Kippstellung mit einem zweiten Teil seiner Wand die Ausblasöffnung verschließt. Das Gerät kann dann wahlweise zum Saugen oder zum Blasen, letzteres beispielsweise zum Lösen des Sauggutes vom Untergrund, benutzt werden, wodurch die Einsatzmöglichkeiten der erfindungsgemäßen Vorrichtung erweitert werden. Die Auswurföffnung und die Ausblasöffnung können dabei eine unterschiedliche Größe aufweisen.

Die Umstellung des Steuergliedes erfolgt vorteilhafterweise mit Hilfe eines Betätigungsgliedes, das der Gerätebenutzer bedienen kann, ohne die Hände vom Gerät wegnehmen zu müssen.

Damit sich an der Innenfläche des das Radialgebläserad enthaltenden Gehäuses kein gehäckseltes Gut ablagert, ist vorzugsweise nur ein enger Spalt zwischen den Schaufeln und dieser Innenfläche vorhanden. Dies gilt auch dann, wenn die Innenfläche dieses Gehäuses zumindest teilweise durch die Innenfläche des Steuergliedes gebildet wird, mittels dessen die Auswurföffnung und die Ausblasöffnung im Wechsel freigegeben und verschlossen werden können.

Wenn, wie dies vorteilhafterweise der Fall ist, der Auswurf des gehäckselten Gutes nicht gegen eine Begrenzungswand des Auswurfkanales erfolgt, kann auch Sauggut aufgenommen und gehäckselt werden, das bei den bekannten Vorrichtungen gegen eine Begrenzungswand des Auswurfkanals geschleudert wird und sich dort festsetzt.

Sofern der Auswurfkanal einen den Luftstrom umlenkenden Abschnitt aufweisen muß, kann in ihm die Gefahr von Ablagerungen gehäckselten Gutes an den Begrenzungswänden dadurch vermieden werden, daß man eine in Strömungsrichtung zunehmende Querschnittsfläche vorsieht. Die Geschwindigkeit des gehäckselten Gutes kann dadurch so stark reduziert werden, daß es sich an den Begrenzungsflächen des Auswurfkanales nicht mehr festsetzt, auch wenn es mit diesen in Berührung kommt. Vorteilhafterweise erstreckt sich der Auswurfkanal über die gesamte Gerätebreite und weist in dem den Luftstrom umlenkenden Kanalabschnitt eine in der Strömungsrichtung zunehmende Höhe auf.

Um einerseits eine hohe Häckselleistung erreichen zu können und andererseits auch bei einem Anfall relativ großer Mengen gehäckselten Gutes dieses ungehindert auswerfen zu können, erstreckt sich bei einer bevorzugten Ausführungsform die Auswurföffnung in Umfangsrichtung des Radialgebläserades über wenigstens nahezu 180°.

Damit im Saugluftstrom mitgeführte, nicht zerkleinerbare Gegenstände das Radialgebläserad passieren können, ohne dieses zu beschädigen oder zu verstopfen, können die Schaufeln des Radialgebläserades elastisch auf einem Tragkörper angeordnet sein. Sie können dann im erforderlichen Maße nachgeben. Außerdem läßt sich mit solchen Schaufeln eine den Luftstrom optimierende und geräuschdämpfende Wirkung erzielen.

Bei einer bevorzugten Ausführungsform ist dem Radialgebläserad eine Selektionseinrichtung vorgeschaltet, welche das nicht zu zerkleinernde Gut von dem zu zerkleinernden Gut trennt. Eine solche Selektionseinrichtung verhindert nicht nur, daß nicht zerkleinerbare Körper oder sprödbrüchiges Sauggut, das vom Radialgebläserad unter Bildung von geschoßartig weggeschleuderter Splitter zetrümmert würde, bis zum Gebläserad gelangt. Sie erleichtert auch sehr wesentlich eine Trennung in kompostierbaren Abfall und Stoffe, welche in anderer Weise verwertet oder entsorgt werden müssen.

Sofern man, wie dies bei einer besonders vorteilhaften Ausführungsform der Fall ist, eine verstellbare Klappe vorsieht, die in einer ersten Stellung den Saugkanal zu einem luftdurchlässigen Sammelbehälter hin verschließt und in einer zweiten Stellung den Saugkanal zu dem Sammelbehälter hin freigibt und den gesamten Luftstrom des Saugkanals in den Sammelbehälter umlenkt, kann man wahlweise das angesaugte Gut dem Radialgebläserad zuführen, das es zerkleinert, oder im Injektionssaugbetrieb das Sauggut unzerkleinert direkt in das Sammelbehältnis fördern. Zweckmäßigerweise wird zusammen mit der verstellbaren Klappe das Steuerglied betätigt, das entweder die Auswurföffnung oder die Blasöffnung freigibt. Ferner ist es zweckmäßig, in den Seitenwänden des Saugkanals nahe dem dem Radialgebläserad benachbarten Ende verschließbare zusätzliche Luftansaugöffnungen vorzusehen, welche nur während des Injektionssaug- und Blasbetriebes geöffnet sind.

Eine besonders weitreichende Anpassungsmöglichkeit der Aufnahmevorrichtung an unterschiedliche Anforderungen erhält man dann, wenn man zusätzlich zu dem zum Radialgebläserad führenden Saugkanal einen Injektionssaugkanal vorsieht, der in einen separaten, luftdurchlässigen Sammelbehälter mündet. Man kann dann bei Verwendung des Steuergliedes, welches wahlweise die Auswurföffnung und eine Blasöffnung freigibt, das aufzunehmende Gut entweder dem Radialgebläserad zuführen, von wo aus es im gehäckselten Zustand in einen Auffangbehälter gelangt, oder es dem luftdurchlässigen Sammelbehälter zuführen. Sofern man das gehäckselte Gut in einen druckdichten Auffangbehälter überführt und den Blaskanal über einen Luftrückführungskanal mit dem Sammelbehälter verbindet, kann man gleichzeitig mit beiden Saugkanälen Sauggut aufnehmen. Man kann sogar, wenn die Injektordüse oder Injektordüsen über eine verstellbare Luftsteuereinrichtung mit dem Blaskanal verbunden ist bzw. sind, einen Teil des Blasluftstromes aus dem Blaskanal austreten lassen, um mittels dieses Luftstromes das einzusammelnde Gut vom Untergrund zu lösen.

Unabhängig davon, ob die Aufnahmevorrichtung nur einen zum Radialgebläserad führenden Saugkanal und/oder einen Injektionssaugkanal aufweist, kann man eine von der den Kanal nach unten begrenzenden Wand in den Kanal hineinragende Leiste oder dergleichen vorsehen, welche verhindert, daß Sauggut, das, beispielsweise wegen seines Gewichtes, aus dem Transportluftstrom herausfällt, wieder zurück zur Kanalansaugöffnung gleitet. Man braucht dann nur von Zeit zu Zeit den Saugkanal nach oben zu schwenken, um dieses Sauggut einem für seine Aufnahme bestimmten Sammelraum zuzuführen.

Eine derartige Leiste kann auch von einem verstellbaren Luftsteuerelement gebildet werden, das in einer Öffnung einer Trennwand zwischen dem Blaskanal und dem Injektionssaugkanal angeordnet ist und in unterschiedlichen Stellungen die im Blaskanal strömende Luft mit wählbarer Strömungsrichtung in den Saugkanal einleitet.

Im folgenden ist die Erfindung anhand von in der Zeichnung dargestellten Ausführungsbeispielen im einzelnen erläutert. Es zeigen
- Fig. 1: einen Längsschnitt eines ersten Ausführungsbeispiels in der Betriebsweise mit wirksamer Selektionseinrichtung und Häckselung des nicht ausgesonderten Sauggutes,
- Fig. 2: eine Draufsicht auf das Ausführungsbeispiel gemäß Fig. 1,
- Fig. 3: einen vergrößert dargestellten Ausschnitt aus Fig. 1,
- Fig. 4: einen Schnitt entsprechend Fig. 3 bei einer Betriebsweise mit Blaslufterzeugung,
- Fig. 5: einen vergrößert dargestellten Ausschnitt einer Draufsicht des Ausführungsbeispiels gemäß den Fig. 1 bis 4,
- Fig. 6: einen Längsschnitt eines zweiten Ausführungsbeispiels,
- Fig. 7: einen Längsschnitt eines dritten Ausführungsbeispiels in der Einstellung für einen Häckselbetrieb,
- Fig. 8: einen Längsschnitt des dritten Ausführungsbeispiels in der Einstellung für einen Injektionssaugbetrieb ohne Häckselung,
- Fig. 9: einen Längsschnitt eines vierten Ausführungsbeispiels,
- Fig. 10: eine teilweise aufgebrochen dargestellte Draufsicht auf den sich an das offene Ende des Blaskanals anschließenden Endabschnitt des Ausführungsbeispiels gemäß Fig. 9,
- Fig. 11: einen Längsschnitt einer Variante des vierten Ausführungsbeispiels,
- Fig. 12: Längsschnitte durch den dem offenen Ende benachbarten End- bis 18 abschnitt des Blaskanals und Saugkanals eines fünften Ausführungsbeispiels mit einem verstellbaren Luftsteuerelement,
- Fig. 19: eine Draufsicht in Richtung X der Fig. 18,
- Fig. 20 und 21: entsprechend den Fig. 12 bis 18 einer Variante des fünften Ausführungsbeispiels.

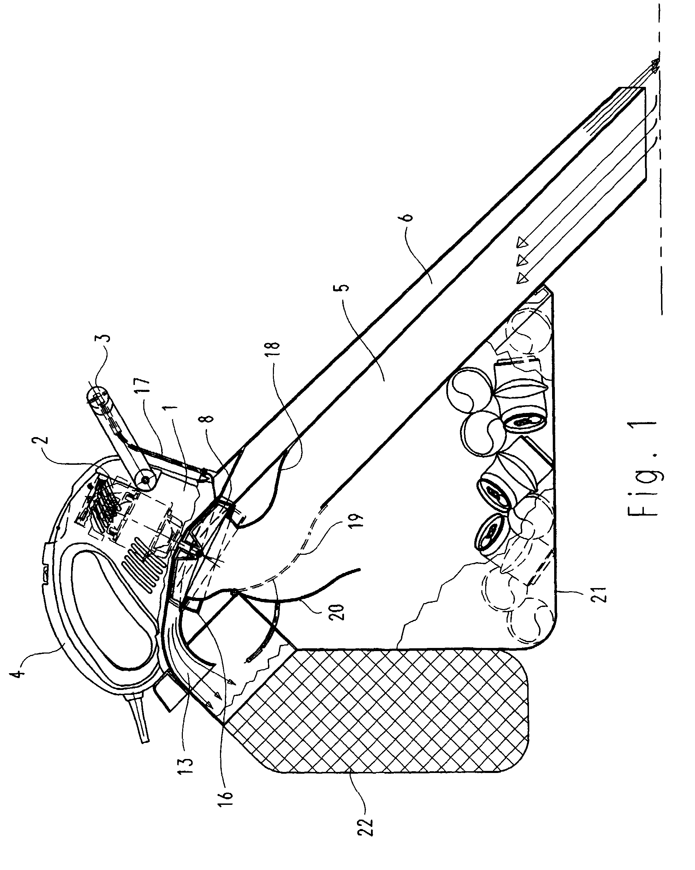

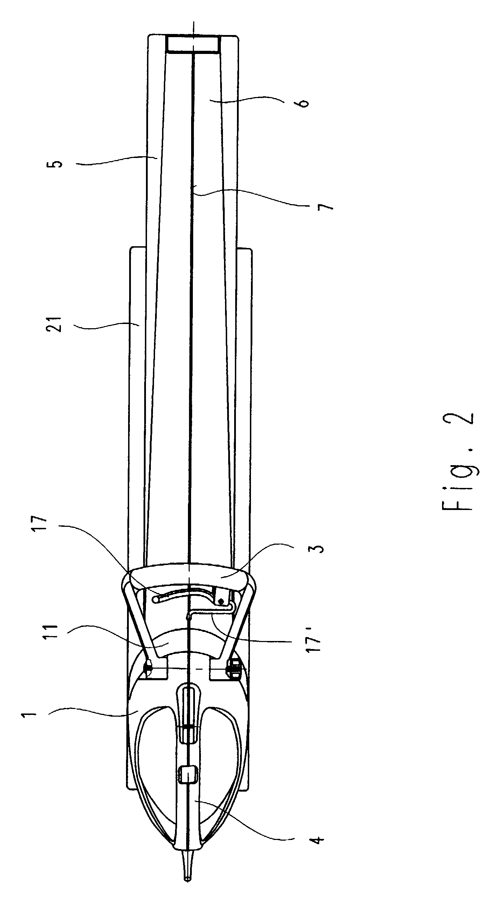

Das in Fig. 1 in seiner Gebrauchslage dargestellte erste Ausführungsbeispiel der erfindungsgemäßen Aufnahmevorrichtung weist ein Motorgehäuse 1 aus Kunststoff in Schalenbauweise auf, in dem ein Elektromotor 2 angeordnet ist. Statt des Elektromotors 2 könnte aber auch beispielsweise ein Verbrennungsmotor vorgesehen sein, der dann allerdings eine andere Form des Motorgehäuses 1 erforderlich machen würde. An der Vorderseite des Motorgehäuses 1 ist ein querliegender Tragbügel angelenkt, den der Benutzer der Vorrichtung mit der einen Hand erfaßt. Mit der anderen Hand erfaßt der Benutzer einen in der Längsmittelebene liegenden Griff 4, der hinten an das Motorgehäuse 1 angeformt ist. Mit dem Motorgehäuse 1 ist das eine Ende eines im Querschnitt rechteckförmigen Saugkanals 5 und eines auf diesem angeordneten und mit ihm einstückig ausgebildeten Blaskanals 6 verbunden. Beide Kanäle 5 und 6 sind wie das Motorgehäuse 1 aus zwei Halbschalen zusammengesetzt. Die in der Längsmittelebene liegende Teilungsfuge 7 ist in den Fig. 2, 5 und 10 sichtbar.

Auf der nach unten weisenden Motorwelle ist ein Radialgebläserad 8 angeordnet, dessen Schaufeln 9 an einem Tragkörper 10 vorgesehen sind, der eine sich vorzugsweise vom Elektromotor 2 weg öffnende konische Form hat. Die Schaufeln 9 sind im Ausführungsbeispiel starr mit dem Tragkörper 10 verbunden, könnten aber auch mit ihm elastisch verbunden sein, um auftretende, nicht zerkleinerbare Gegenstände passieren lassen zu können und in Abhängigkeit von der Fliehkraft unterschiedliche, den Luftstrom optimierende und geräuschdämpfende Wirkungungen entfalten zu können.

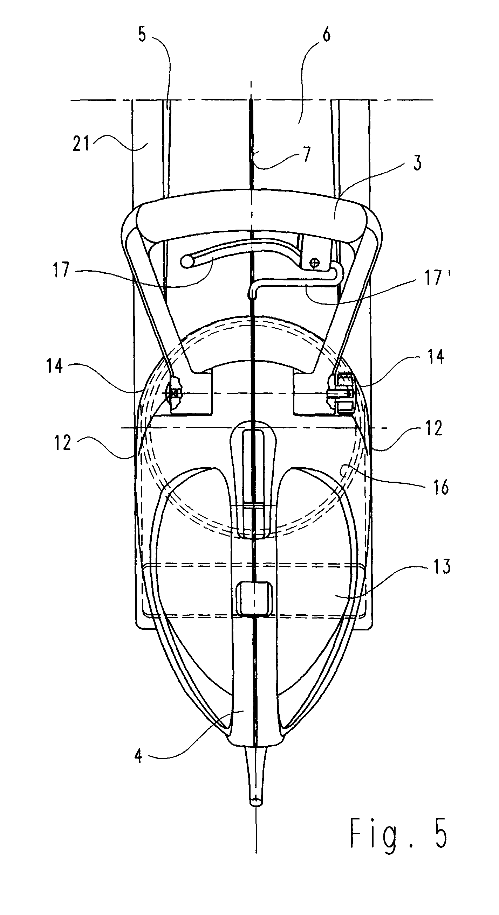

Das Radialgebläserad 8 ist nach oben und zur Seite hin von einem Gebläsegehäuse 11 abgedeckt, das wie das Motorgehäuse 1 aus zwei Halbschalen zusammengesetzt ist. Die beiden Seitenwände 12 des Gebläsegehäuses 11 verlaufen vorzugsweise von einer Quermittelebene aus, in welcher die Drehachse des Radialgebläserades 8 liegt und parallel zueinander in einen Auswurfkanal 13 übergehen, der eine vorzugsweise rechteckige Querschnittsform hat und sich, wie Fig. 5 zeigt, in etwa über die gesamte Gerätebreite erstreckt. Im Anschluß an einen geradlinigen Abschnitt ist der Auswurfkanal 13 nach unten hin gekrümmt, wobei seine Höhe zu seinem offenen Ende hin zunimmt, um die Strömungsgeschwindigkeit im Auswurfkanal 13 zu reduzieren. Dank der seitlichen Begrenzung des Gebläsegehäuses 11 und des Auswurfkanals 13 durch die zur Teilungsfuge 7 parallel verlaufenden oder auch konisch nach außen sich erweiternden, ebenen Seitenwände 12 erfährt der das Häckselgut mit sich führende Luftstrom durch sie keine Umlenkung, wodurch die Ablagerung von Häckselgut an ihnen und im Auswurfkanal verhindert wird.

Der in einer vorzugsweise zur Drehachse des Radialgebläserades 8 konzentrischen Fläche liegende Anfang des Auswurfkanals 13 bildet die sich über ca. 180° erstreckende, im Querschnitt vorzugsweise rechteckförmige Auswurföffnung des Gebläsegehäuses 11. Ihr diametral gegenüberliegend bildet der Anfang des Blaskanales 6 eine Ausblasöffnung, die sich im Ausführungsbeispiel über weniger als 180° erstreckt, weshalb hier der Blaskanal 6 noch über die Ausblasöffnung hinaus verlängerte, zylindrisch gekrümmte Seitenwände 14 des Gebläsegehäuses 11 bildet.

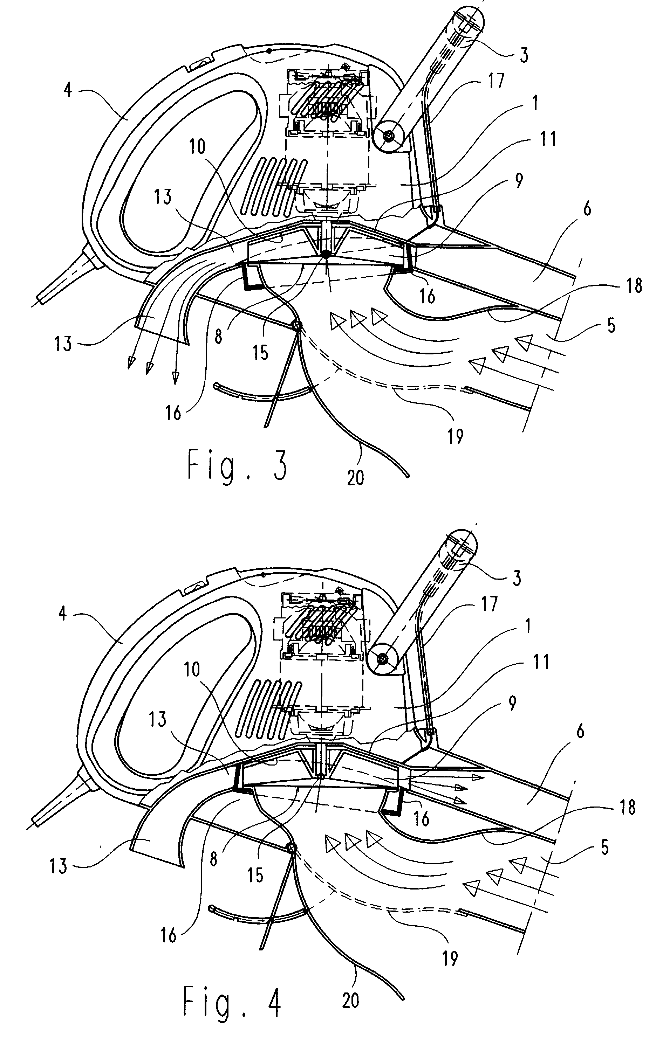

Wie die Fig. 1 sowie 3 und 4 zeigen, ist auf einer die Motorwelle und die Teilungsfuge 7 rechtwinklig kreuzenden Schwenkachse 15 ein Steuerring 16 gelagert, welcher in einer Mittelstellung, in welcher seine Längsachse mit derjenigen des Radialgebläserades 8 fluchtet, dieses umfaßt und dabei zwischen das Radialgebläserad 8 und die Auswurföffnung sowie die Ausblasöffnung eingreift. In der in Fig. 3 dargestellten Schwenklage liegt der Steuerring 16 an der die Rückseite des Tragkörpers 10 abdeckenden Wand des Gebläsegehäuses 11 dicht an und verschließt die Ausblasöffnung vollständig, wohingegen die Auswurföffnung vollständig freigegeben ist. In der in Fig. 4 dargestellten, anderen Kippstellung verschließt der Steuerring 16 die Auswurföffnung vollständig und gibt die Ausblasöffnung vollständig frei. Längs des in Anlage an das Gebläsegehäuse 11 kommenden Randes des Steuerringes 16 kann eine Dichtungskante vorgesehen sein, die an das Gebläsegehäuse 11 angepaßt ist. Der Spalt zwischen der Innenwand des Steuerringes 16 und dem Radialgebläserad ist relativ gering gewählt, damit Ablagerungen an der Innenwand des Steuerringes 16 von den Schaufeln 9 entfernt werden. Für die Schwenkbewegung des Steuerringes 16 und seine Fixierung in der gewählten Schwenklage ist am Tragbügel 3 ein Betätigungsglied 17 vorgesehen, von dem aus über einen Bowdenzug 17' die Schwenkbewegung des Steuerringes 16 bewirkt werden kann.

Die den Saugkanal 5 durchströmende Luft wird, kurz ehe sie das Radialgebläserad 8 erreicht, nach unten umgelenkt, wie die in den Fig. 3 und 4 eingezeichneten Pfeile zeigen. Danach strömt die Luft in einer gekrümmten Bahn nach oben zum Radialgebläserad 8. Diese Luftführung nach unten hat zur Folge, daß massenträge Teile des Sauggutes gegen den die Luftumlenkung nach unten bewirkenden Bereich der oberen Wand des Saugkanales 5 prallen. Dieser Bereich bildet deshalb eine Prallplatte 18. Ein anderer Teil des Sauggutes wird durch die Luftumlenkung gegen die untere Begrenzungswand des Saugkanales 5 geführt, der hier, wie die Fig. 3 und 4 zeigen, eine große Öffnung 19 aufweist, die mittels einer schwenkbaren Klappe 20 auch dicht verschließbar ist. Das von der Luftströmung zur Öffnung 19 hin gelenkte Sauggut und das von der Prallplatte 18 abprallende Sauggut fällt durch die Öffnung 19 in einen an der Unterseite des Saugkanals 5 festgelegten Sammelbehälter 21, falls die Öffnung 19 geöffnet ist. Bei diesem in den Sammelbehälter 21 fallenden Sauggut handelt es sich um schwerere Körper, welche vom Radialgebläserad 8 nicht zerkleinert werden können und auch nicht zerkleinert werden sollen. Nur Grüngut und dergleichen gelangt trotz der Umlenkung der Strömung wegen seines wesentlich geringeren Gewichtes und besseren Transportfähigkeit zum Radialgebläserad 8 und wird von dessen Schaufel 9 gehäckselt. Von dort gelangt das Häckselgut durch den Auswurfkanal 13 in einen luftdurchlässigen Auffangsack 22, der ebenso wie der luftundurchlässige Sammelbehälter 21 lösbar mit dem Motorgehäuse 1 und/oder dem Saugkanal 5 verbunden ist. Wenn der Steuerring 16 die Auswurföffnung freigibt und die Klappe 20, die zweckmäßigerweise zusammen mit dem Steuerring 16 geschwenkt wird, in ihrer Freigabestellung steht, wird das Sauggut selbsttätig selektiert. Nur Gras, Blätter und dergleichen, also häckselfähiges Material, wird gehäckselt und im Auffangsack 22 gesammelt, während das übrige Sauggut, bei dem es sich in der Regel um recycelfähiges Material handelt, im Sammelbehälter 21 gesammelt wird. Verschließt hingegen der Steuerring 16 die Auswurföffnung und gibt die Ausblasöffnung vollständig frei, dann richtet der Gebläsekanal 6 einen starken Luftstrom gegen den das Sammelgut tragenden Untergrund und löst das Sammelgut vom Untergrund. Die Öffnung 19 kann dabei geschlossen oder für den Fall, daß Sauggut durch den Saugkanal 5 gefördert wird, auch geöffnet sein.

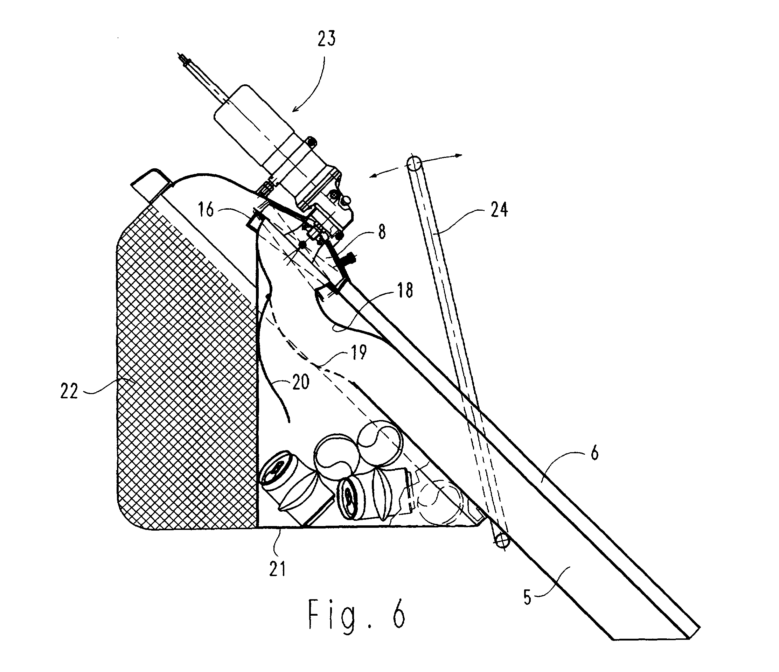

Das in Fig. 6 dargestellte zweite Ausführungsbeispiel unterscheidet sich von dem Ausführungsbeispiel gemäß den Fig. 1 bis 5 im wesentlichen nur dadurch, daß das Motorgehäuse 1 fehlt, weil der Antrieb des Radialgebläserades 8 mittels eines Einhand-Winkelschleifers 23 erfolgt, auf dessen normalerweise die Scheibe tragender Welle das Radialgebläserad 8 festgelegt ist. Das Gehäuse des Einhand-Winkelschleifers 23 ersetzt den Griff 4 des ersten Ausführungsbeispiels. Anstelle des Tragbügels 3 ist ein Tragbügel 24 vorhanden, der schwenkbar an der Unterseite des Saugkanals 5 neben dem Sammelbehälter 21 gelagert ist.
Wegen weiterer Einzelheiten kann auf die Ausführungen zu dem ersten Ausführungsbeispiel verwiesen werden, weil insofern weitgehende Übereinstimmung mit diesem besteht. Übereinstimmende Teile sind mit gleichen Bezugszahlen gekennzeichnet.

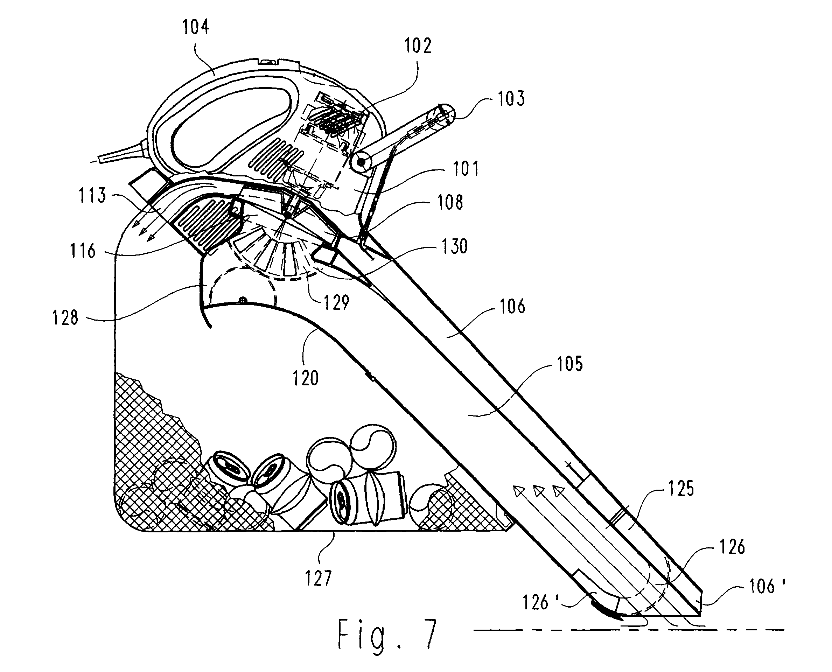

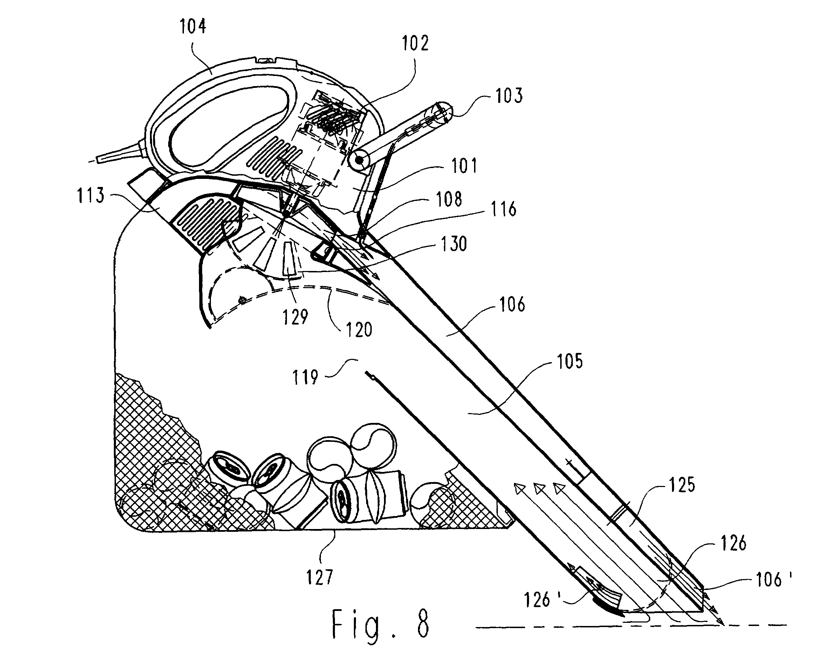

Ein drittes Ausführungsbeispiel der erfindungsgemäßen Aufnahmevorrichtung ist in den Fig. 7 und 8 dargestellt. Dieses dritte Ausführungsbeispiel unterscheidet sich von dem ersten Ausführungsbeispiel nur durch die im folgenden erläuterten Merkmale. Sich entsprechende Teile sind mit um 100 größeren Bezugszahlen gekennzeichnet.

Eine vom Tragbügel 103 über einen Seilzug steuerbare Luftlenkeinrichtung 125 im unteren Endabschnitt des Blaskanals 106 ermöglicht es, die Blasluft entweder am offenen Ende des Blaskanals 106 in einem gegen den Untergrund gerichteten Strahl austreten zu lassen oder sie über bogenförmige Kanäle 126 an beiden Seiten des Saugkanals 105 zu Auslaßöffnungen 126' im Bereich von dessen unterem Ende umzulenken, um im Saugkanal 105 einen Primärluftstrom austreten zu lassen, der Sekundärluft ansaugt, also einen Injektionssaugbetrieb ermöglicht.
Die Schwenkklappe 120 verschließt entweder die in der Unterseite des Saugkanals 105 vorgesehene Öffnung 119, wie in Fig. 7 dargestellt, oder lenkt den gesamten Luftstrom des Saugkanals 105 in den einzigen vorhandenen Sammelbehälter 127, in welchen auch der Auswurfkanal 113 mündet. Die Klappe 120 ist deshalb zum Inneren des Sammelbehälters 127 hin gekrümmt.
Im Ausführungsbeispiel ist nahe dem oberen Ende des Saugkanals 105 ein zu diesem hin offener Sammelraum 128 vorgesehen, in welchem sich bei geschlossener Öffnung 119 kleinere Mengen desjenigen Sammelgutes sammeln kann, das nicht häckselfähig ist. Der Luftstrom wird deshalb, ehe er zum Radialgebläserad 108 gelangt, gegen den Sammelraum 128 hin umgelenkt. Damit beim Injektionssaugbetrieb, in dem die Auswurföffnung vom Steuerring 116 verschlossen ist, das Radialgebläserad 108 die Luft nicht aus dem Sammelbehälter 127 anzusaugen braucht, die Klappe 120 also, wie in Fig. 8 dargestellt, den oberen Endabschnitt des Saugkanals 105 dicht verschließen kann, sind in den Seitenwänden des oberen Endabschnittes des Saugkanals 105 Lufteinlaßöffnungen 129 vorgesehen, die mittels je einer Verschlußplatte 130 verschließbar sind. Im Ausführungsbeispiel erfolgt die Betätigung der Verschlußplatten 130 gemeinsam mit der Betätigung der Klappe 120. Auf der Schwenkachse letzterer ist für jede Verschlußplatte 130 ein Zahnradsegment angeordnet, das in eine Umfangsverzahnung der Verschlußplatte 130 eingreift. Die Verstellung des Steuerringes 116, der Klappe 120 und der Verschlußplatten 130 erfolgt gemeinsam vom Tragbügel 103 aus. Die Vorrichtung kann deshalb, ohne daß der Benutzer die Hand vom Tragbügel 103 wegzunehmen braucht, von einer Betriebsart in die andere umgestellt werden.

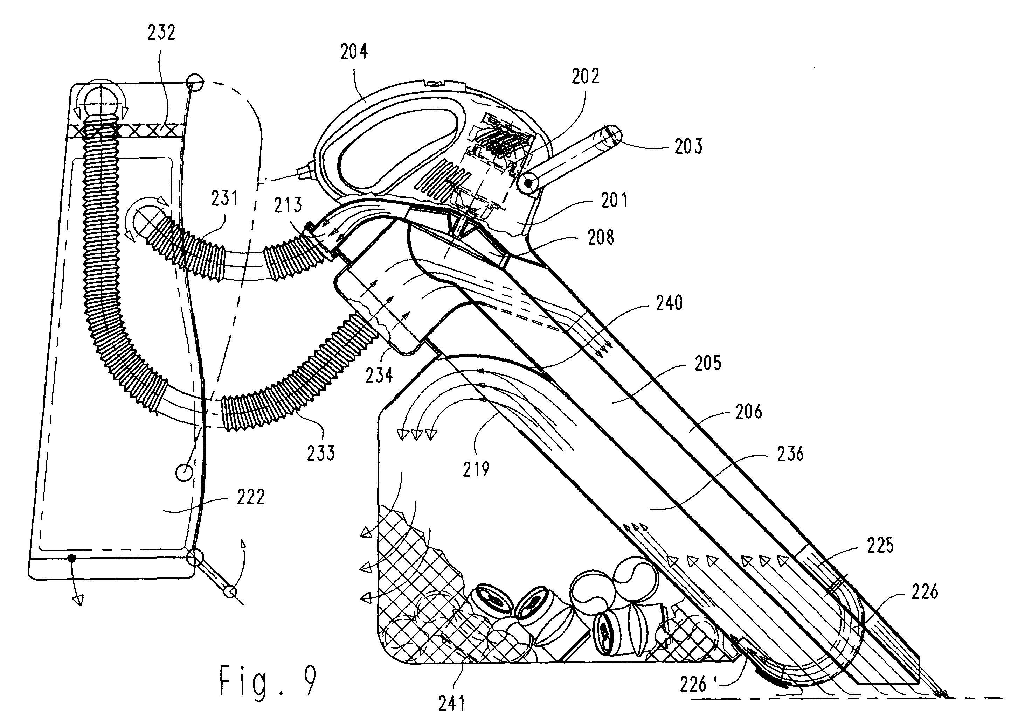

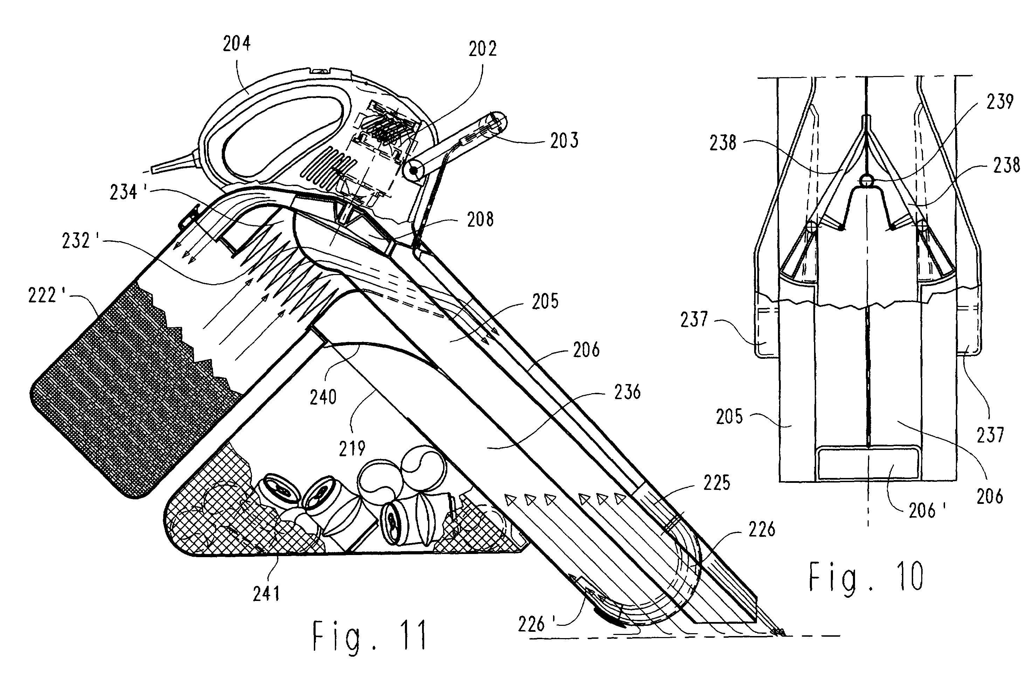

Ein viertes Ausführungsbeispiel ist in den Fig. 9 und 10 dargestellt. Da auch dieses Ausführungsbeispiel teilweise wie das erste Ausführungsbeispiel ausgebildet ist, sind sich entsprechende Teile mit um 200 größeren Bezugszahlen gekennzeichnet.
Übereinstimmend ist die Ausbildung des Motorgehäuses 201, des Elektromotors 202, des Tragbügels 203, des Griffes 204, des Gebläserades 208 und des Auswurfkanals 213. Nicht vorhanden ist ein Steuerring, da die Auswurföffnung, die sich wie beim ersten Ausführungsbeispiel über ca. 180° des Radialgebläserades 208 erstreckt, ständig vollständig geöffnet ist und eine Ausblasöffnung in der mit engem Spalt das Radialgebläse 208 auf der der Auswurföffnung gegenüberliegenden Seite umgebenden Gehäusewand fehlt. Weiterhin fehlt im Vergleich zu dem ersten Ausführungsbeispiel eine Öffnung in der Unterseite des Saugkanals 205 und damit auch eine Klappe zum Verschließen einer solchen Öffnung. Häckselfähiges Sauggut, das durch den Saugkanal 205 angesaugt wird, gelangt deshalb zum Radialgebläserad 208 und wird dort zerkleinert. Dieses Häckselgut wird durch den Auswurfkanal 213 und einen lösbar mit diesem verbundenen Schlauch 231 zu einem luftundurchlässigen Sammelbehälter 222 transportiert, der im Ausführungsbeispiel als Rucksack ausgebildet ist. Dieser Sammelbehälter 222 enthält im Bereich seines oberen Endes einen Filter 232, hinter dem lösbar ein Luftrückführungsschlauch 233 angeschlossen ist. Dieser führt die abgereinigte Luft zurück zu einem Lufteinlaßkasten 234, der unterhalb des Auswurfkanals 213 vorgesehen ist und von dem aus die Luft seitlich am Saugkanal 205 vorbei in den Blaskanal 206 gelangt.

Im unteren Endabschnitt des Blaskanals 206 ist wie bei dem Ausführungsbeispiel gemäß den Fig. 7 und 8 eine Luftlenkeinrichtung 225 vorgesehen, mittels deren die Blasluft wahlweise zum offenen Ende des Blaskanals 206 oder zu zwei Auslaßöffnungen 226' gelenkt werden kann, die in der einen bzw. anderen Seitenwand eines Injektionssaugkanals 236 nahe dessen Ansaugöffnung vorgesehen sind. Dieser im Querschnitt wie der Saugkanal 205 und der Blaskanal 206 vorzugsweise rechteckförmige Injektionssaugkanal 236 ist direkt unterhalb des Saugkanals 205 angeordnet und an diesen einstückig angeformt. Zu den beiden Austrittsöffnungen 226' führt je ein etwa halbkreisförmig gekrümmter Kanal 226. Diese Kanäle 226 zweigen von der einen bzw. anderen Seite des Blaskanals 206 ab und sind dann an diesem sowie am Saugkanal 205 seitlich vorbeigeführt, wie Fig. 10 zeigt.
Die Luftlenkeinrichtung 225 weist im Ausführungsbeispiel zwei schwenkbare Klappen 238 auf, die in der in Fig. 10 mit ausgezogenen Linien dargestellten Schwenklage, in welcher sie einen der Strömungsrichtung entgegengerichteten Keil bilden, die gesamte Blasluft in die Kanäle 226 lenken, während sie in der in Fig. 10 mit gestrichelten Linien dargestellten Schwenklage die in den Seitenwänden des Blaskanals 206 vorgesehenen Eintrittsöffnungen der Kanäle 226 vollständig verschließen und den Weg für die Blasluft zum offenen Ende 206' des Blaskanals 206 freigeben. Die Betätigung der Klappen 238 erfolgt mittels eines Bowdenzuges 239 vom Tragbügel 203 aus.

Der Injektionssaugkanal 236 weist nahe seinem oberen Ende in seiner unteren Begrenzungswand eine sich über seine gesamte Breite erstreckende Öffnung 219 auf, zu der hin der Luftstrom und das in ihm transportierte Sammelgut durch eine der Öffnung 219 gegenüberliegende Luftleitplatte 240 umgelenkt wird, wie die in Fig. 9 eingetragenen Pfeile erkennen lassen. Die Luft und das Sammelgut gelangen dann in einen luftdurchlässigen Auffangbehälter 241, der lösbar an der Unterseite des Injektionssaugkanales 236 angeordnet ist. Soll nur im Blasbetrieb gearbeitet werden, dann werden die schwenkbaren Klappen 238 so eingestellt, daß dem Injektionssaugkanal 236 keine Luft zugeführt wird. Sofern gleichzeitig häckselfähiges Sauggut mittels des Saugkanals 205 und nicht häckselfähiges Sauggut mittels des Injektionssaugkanals 236 aufgenommen werden soll, werden die Klappen 238 so eingestellt, daß ein Teil der Blasluft oder die gesamte Blasluft in den Injektionssaugkanal 236 eingeblasen wird.

Die in Fig. 11 dargestellte Variante des vierten Ausführungsbeispiels unterscheidet sich von letzterem nur dadurch, daß der das gehäckselte Gut aufnehmende luftundurchlässige Auffangbehälter 222' lösbar am Gerät angeordnet und sein Filter 232' in dem Lufteinlaßkasten 234' angeordnet ist.

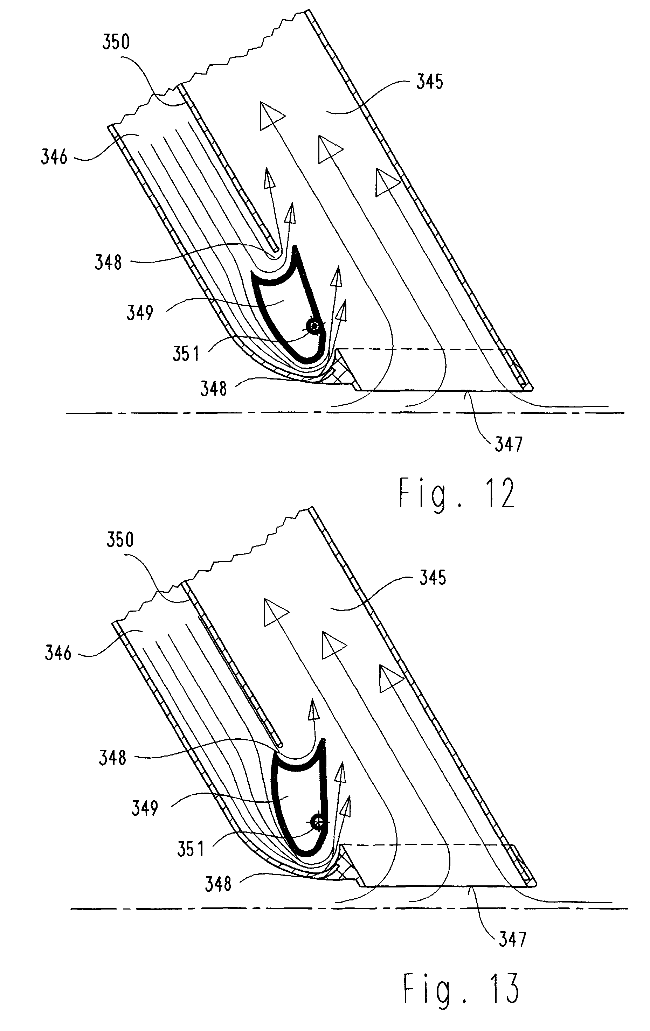

Sofern in der Trennwand 350 eines fünften Ausführungsbeispiels zwischen einem Injektionssaugkanal 345 und einem längs dessen Unterseite verlaufenden Blaskanal 346 nahe der Ansaugöffnung 347 eine Luftdurchtrittsöffnung 348 vorgesehen ist, wie dies die Fig. 12 bis 18 sowie 20 bis 21 zeigen, kann man in der Luftdurchtrittsöffnung 348 ein verstellbares Luftsteuerelement 349 anordnen und mittels dessen die Blasluft steuern. Im Ausführungsbeispiel ist das Luftsteuerelement 349 auf einer in der Ebene der Trennwand 350 oder einer dazu parallelen Ebene liegenden und quer zur Längsrichtung des Injektionskanals 345 verlaufenden Achse 351 schwenkbar gelagert. Das Luftsteuerelement 349 weist in seinem eine nach unten weisende Nase bildenden Teil ein Querschnittsprofil ähnlich einem Tragflügel auf, wobei die gewölbte Oberseite auf der dem Injektionssaugkanal 345 abgekehrten Seite und die ebene Unterseite auf der dem Injektionssaugkanal 345 zugekehrten Seite vorgesehen ist. Das der Nase abgewandte Ende des Luftsteuerelementes 349 hat die Form einer Hohlkehle.

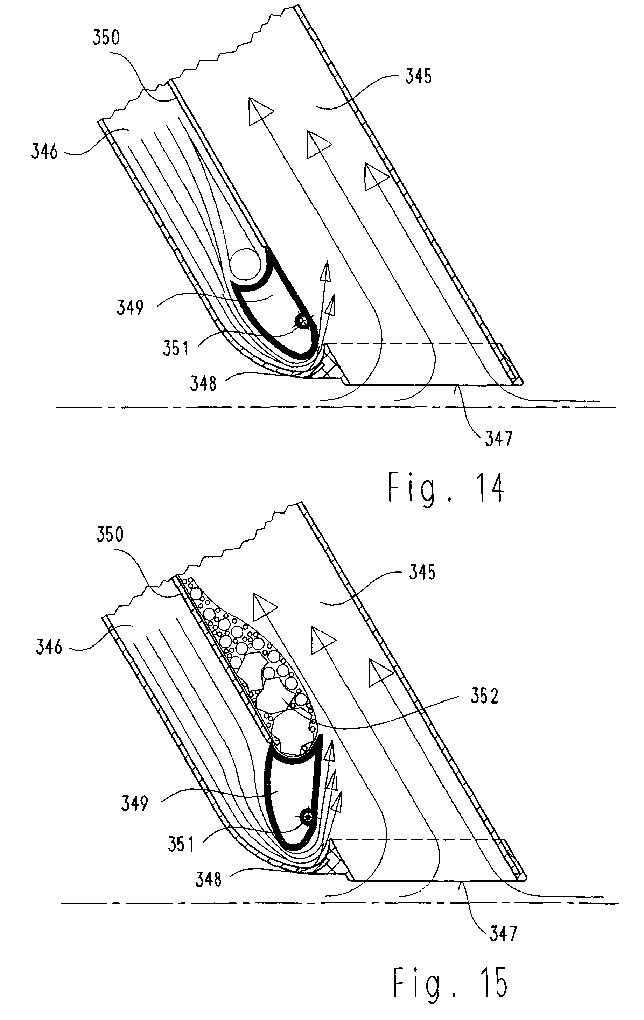

Ist die Schwenklage des Luftsteuerelementes 349 so gewählt, daß keine der beiden Längskanten der Hohlkehle den Lufteintritt in den Injektionssaugkanal 345 sperrt, wie dies bei den in den Fig. 12 und 13 dargestellten Schwenklagen der Fall ist, wird ein Teil der Blasluft von der Hohlkehle um etwas weniger als 180° umgelenkt. Dieser umgelenkte Teilluftstrom tritt deshalb in den Injektionssaugkanal 345 in Saugrichtung mit einem spitzen Winkel relativ zur Längsachse des Injektionssaugkanals 345 ein. Die übrige Blasluft umströmt die nach unten weisende Nase des Luftsteuerelementes 349 und wird von einer mit deren Profil korrespondierenden Umlenkfläche des Blaskanals 346 in einer ähnlichen Richtung wie der andere Teilluftstrom in den Injektionssaugkanal 345 eingeblasen, nur näher an dessen Ansaugöffnung 347.
Wie Fig. 14 zeigt, kann die von der Hohlkehle und der ebenen Seite des Luftsteuerelementes 349 gebildete Längskante den Lufteintritt in den Injektionssaugkanal 345 über diese Kante hinweg verhindern, wenn die ebene Seite des Luftsteuerelementes 349 mit der Trennwand 350 fluchtet. Die gesamte Blasluft umströmt dann die nach unten weisende Nase des Luftsteuerelementes 349. Das Luftsteuerelement kann aber auch, wie Fig. 15 zeigt, in eine Schwenkstellung gebracht werden, in welcher die Längskante am Übergang von der Hohlkehle zu der gekrümmten Seite des Luftsteuerelementes 349 den Lufteintritt in den Injektionssaugkanal 345 sperrt. Das Luftsteuerelement 349 bildet dann mit seiner Hohlkehle eine Stützfläche für Sammelgut 352, das aus dem Transportluftstrom im Injektionssaugkanal 345 ausgefallen und auf der Trennwand 350 sich abgelagert hat. Um dieses Sammelgut 352 in den Auffangbehälter zu transportieren, braucht nur kurzzeitig der Injektionssaugkanal 345 so weit nach oben geschwenkt zu werden, daß das Sammelgut 352 auf der Trennwand 350 zum Sammelbehälter rutscht. Das Luftsteuerelement 349 verhindert also in der in Fig. 15 dargestellten Schwenkstellung, daß Sammelgut, das einmal in den Injektionssaugkanal 345 gelangt ist, wieder aus diesem herausfallen kann. Selbstverständlich kann eine Stützfläche für Sammelgut, das vom Transportluftstrom nicht bis zum Sammelbehälter transportiert werden kann, auch durch ein feststehendes Element gebildet sein und nicht nur bei dem Injektionssaugkanal, sondern auch einem anderen Saugkanal Verwendung finden.

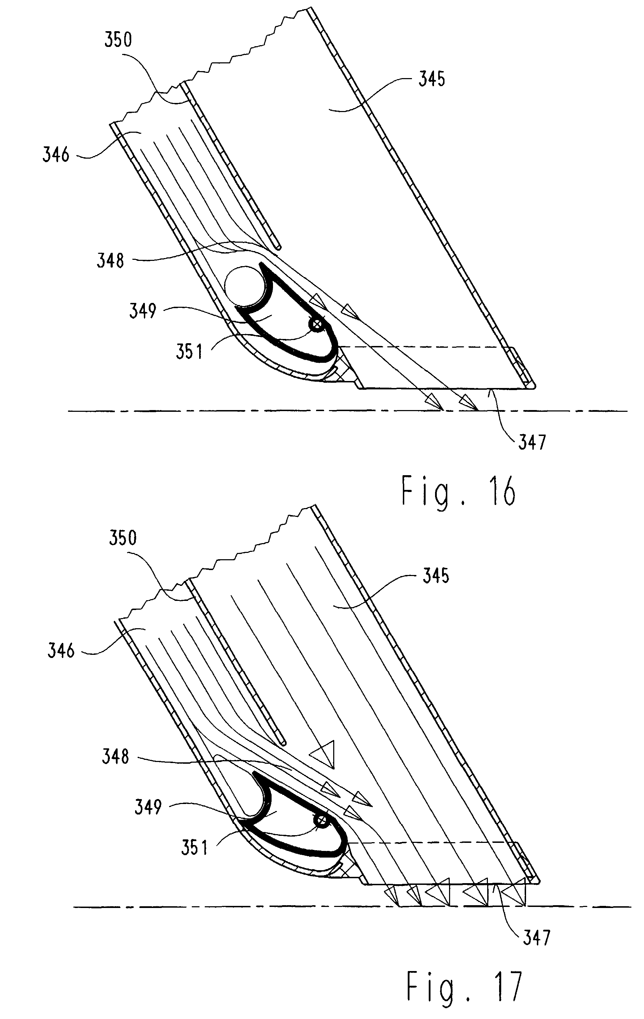

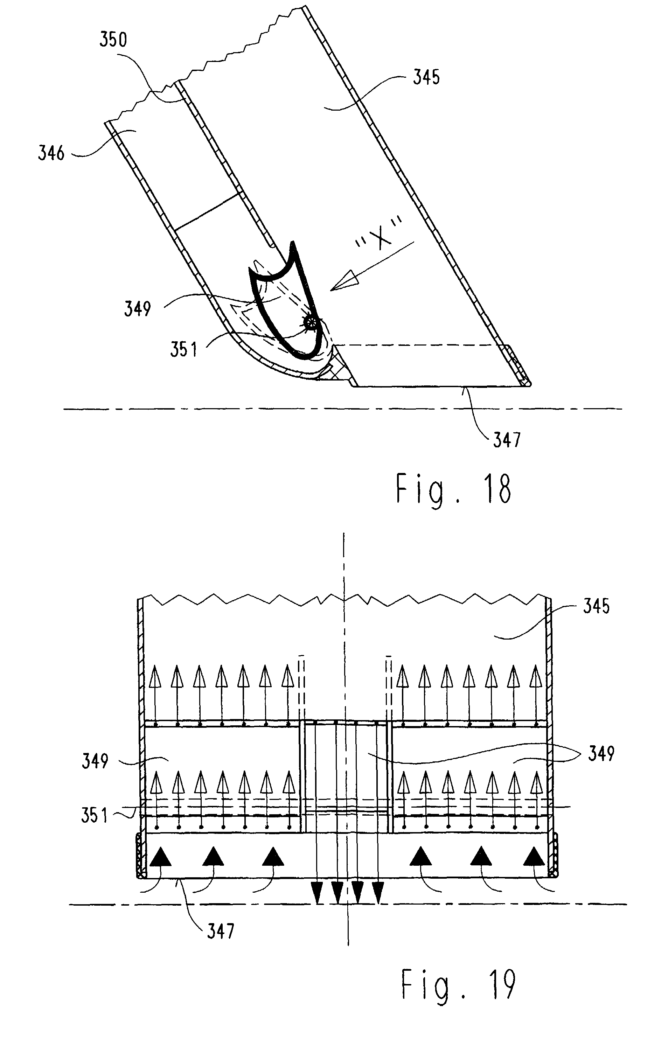

Die Fig. 16 und 17 zeigen zwei Schwenkstellungen des Luftsteuerelementes 349, in denen die Blasluft in einer Richtung zur Ansaugöffnung 347 hin in den Injektionssaugkanal 345 eintritt, was beispielsweise dann erwünscht ist, wenn Abfälle oder dergleichen weggeblasen oder für eine folgende Aufnahme vom Untergrund gelöst werden sollen.
Wie die Fig. 18 und 19 zeigen, kann das Luftsteuerelement 349 aus wenigstens zwei in Längsrichtung seiner Schwenkachse 351 nebeneinander angeordneten Abschnitte bestehen. Im Ausführungsbeispiel sind drei Abschnitte vorgesehen, von denen der mittlere eine geringere axiale Länge hat als die beiden äußeren, wie dies Fig. 19 erkennen läßt. Man kann dann die Abschnitte des Luftsteuerelements 349 beispielsweise so einstellen, daß die beiden äußeren Abschnitte je einen Injektionsluftstrahl für einen Injektionssaugbetrieb erzeugen, während der mittlere Abschnitt einen zur Ansaugöffnung 347 gerichteten Luftstrahl erzeugt, um das anzusaugende Gut vom Untergrund abzuheben.

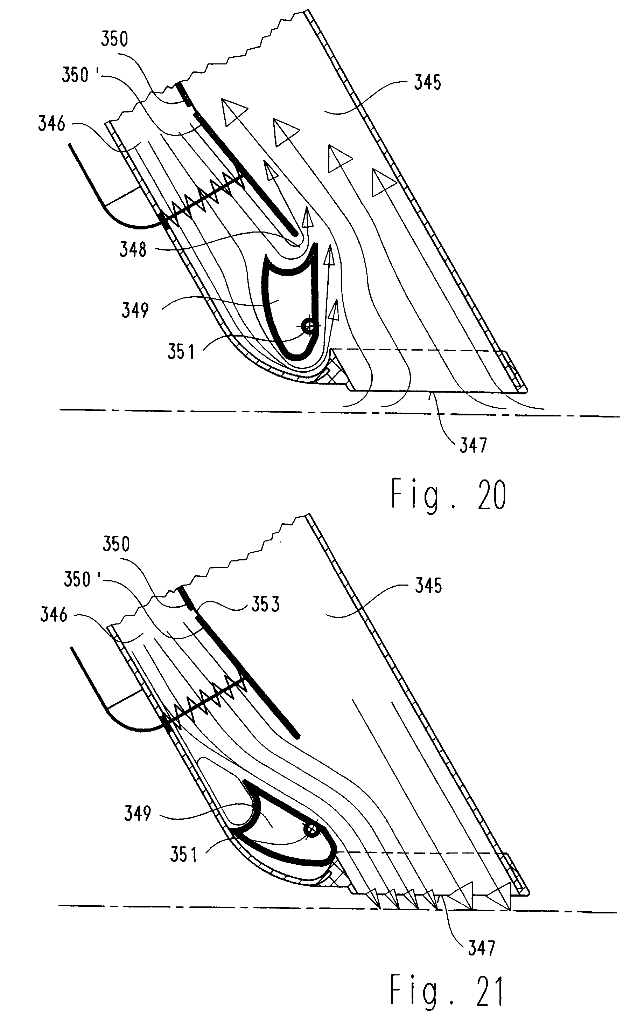

Wie die Fig. 20 und 21 zeigen, kann das Luftsteuerelement 349 mit einem schwenkbaren Abschnitt 350' der Trennwand 350 kombiniert werden. Der Abschnitt 350' erstreckt sich von der Luftdurchtrittsöffnung 348 nach oben hin zu einer parallel zur Schwenkachse 351 des Luftsteuerelementes 349 verlaufenden Gelenkstelle 353. Der Abschnitt 350' der Trennwand 350 kann, wie die Fig. 20 und 21 zeigen, in den Injektionssaugkanal 345 hinein geschwenkt werden. Wenn, wie bei der Schwenkstellung gemäß Fig. 20, auch das Luftsteuerelement 349 in den Injektionssaugkanal 345 hineinragt, bilden das Luftsteuerelement 349 und der Abschnitt 350' zusammen einen sich von der Ansaugöffnung 347 aus verengenden und dann wieder erweiternden Abschnitt des Injektionssaugkanals 345, wobei die Blasluft sowohl nahe der Ansaugöffnung 347 als auch im Bereich der engsten Stelle in den Injektionssaugkanal 345 eingeblasen wird, was zusammen mit der Verengung eine besonders gute Saugwirkung ergibt.

Wie Fig. 21 zeigt, kann das Luftsteuerelement 349 aber auch beispielsweise in eine Schwenklage gebracht werden, in der es an der unteren Begrenzungswand des Blaskanals 346 anliegt. Das Luftsteuerelement 349 und der Abschnitt 350' lenken dann die Blasluft ohne eine wesentliche Engstelle und damit ohne eine Drosselwirkung gegen die Ansaugöffnung 347 hin, so daß hier ein besonders starker Luftstrom austritt.

## Patentansprüche

1. Aufnahmevorrichtung für Abfälle aller Art im privaten und gewerblichen Bereich mit einem von einem Motor antreibbaren Radialgebläserad, das in einem Gehäuse angeordnet ist, welches in einer sich in Umfangsrichtung des Gebläserades erstreckenden Wand eine Auslaßöffnung aufweist, an die sich ein Auslaßkanal anschließt, wobei das Radialgebläserad als Zerkleinerungswerkzeug für den durch den Saugkanal hindurch zum Gebläserad gelangenden Abfall ausgebildet ist, dadurch gekennzeichnet, daß der durch die Auslaßöffnung bestimmte Ausströmbereich hinsichtlich seiner Querschnittsfläche und/oder seiner Strömungsrichtung veränderbar ist.

2. Aufnahmevorrichtung nach Anspruch 1, gekennzeichnet durch wenigstens ein Steuerglied (16; 116) für die Einstellung der Querschnittsfläche und/oder der Strömungsrichtung.

3. Aufnahmevorrichtung nach Anspruch 2, dadurch gekennzeichnet, daß bei Vorhandensein einer Auswurföffnung für gehäckseltes Material sowie einer Ausblasöffnung mittels des Steuergliedes (16; 116) wahlweise die Auswurföffnung freigebbar und verschließbar ist, und daß das Steuerglied (16; 116) bei freigegebener Auswurföffnung die Ausblasöffnung des Gehäuses (11) verschließt und bei geschlossener Auswurföffnung die Ausblasöffnung freigibt.

4. Aufnahmevorrichtung nach Anspruch 3, dadurch gekennzeichnet, daß die Auswurföffnung und die Ausblasöffnung vorzugsweise einander gegenüberliegend angeordnet sind.

5. Aufnahmevorrichtung nach einem der Ansprüche 2 bis 4, dadurch gekennzeichnet, daß das Steuerglied (16; 116) ein Hohlkörper ist, der um eine Schwenkachse (15) kippbar gelagert ist und in seiner einen Kippstellung mit einem ersten Teil seiner Wand die Auswurföffnung und in seiner anderen Kippstellung mit einem zweiten Teil seiner Wand die Ausblasöffnung verschließt.

6. Aufnahmevorrichtung nach Anspruch 5, dadurch gekennzeichnet, daß die Schwenkachse (15) in Richtung eines Durchmessers des Hohlkörpers und im rechten Winkel zur Drehachse des Radialgebläserades (8; 108; 208) verläuft.

7. Aufnahmevorrichtung nach Anspruch 5, dadurch gekennzeichnet, daß die Schwenkachse zumindest annähernd parallel zu einem Durchmesser des hohlen Körpers außerhalb dieses Durchmessers verläuft.

8. Aufnahmevorrichtung nach einem der Ansprüche 5 bis 7, dadurch gekennzeichnet, daß senkrecht zur Schwenkachse einseitig außerhalb des Gebläserades und zu dessen Drehachse zumindest annähernd parallel verlaufend eine zusätzliche Schwenkachse vorgesehen ist.

9. Aufnahmevorrichtung nach einem der Ansprüche 3 bis 8, dadurch gekennzeichnet, daß das Steuerglied (16; 116) in wenigstens einer Stellung fixierbar ist.

10. Aufnahmevorrichtung nach einem der Ansprüche 5 bis 9, dadurch gekennzeichnet, daß der das eine Ende des Hohlkörpers (16; 116) definierende Rand zumindest in den beiden Kippstellungen dicht an der Innenwandfläche des das Radialgebläserad (8; 108; 208) enthaltenden Gehäuses (11) anliegt.

11. Aufnahmevorrichtung nach einem der Ansprüche 3 bis 10, dadurch gekennzeichnet, daß das Steuerglied mit einem Abschnitt eines kurz vor dem Radialgebläserades liegenden Ansaugkanals eine bewegliche Einheit bildet, die mit dem restlichen Teil des Ansaugkanals über einem flexiblen Schlauch luftdicht gekoppelt ist.

12. Aufnahmevorrichtung nach einem der Ansprüche 6 bis 11, gekennzeichnet durch ein an einem Griffteil (3; 103; 203) vorgesehenes Betätigungsglied (17) für die Einstellung des Steuergliedes (16; 116).

13. Aufnahmevorrichtung nach einem der Ansprüche 3 bis 12, gekennzeichnet durch einen vorzugsweise engen Spalt zwischen den Schaufeln (9) des Radialgebläserades (8; 108; 208) und der Innenfläche des Steuergliedes (16; 116) in dessen als Teil des Gehäuses (11) dienendem Bereich.

14. Aufnahmevorrichtung nach einem der Ansprüche 1 bis 13, dadurch gekennzeichnet, daß von den beiden seitlichen Begrenzungswänden (12) eines Auswurfkanals (13; 113; 213), welche sich an die in der Laufrichtung des Radialgebläserades (8; 108; 208) den Anfang bzw. das Ende der Auswurföffnung definierenden Randbereiche des Gehäuses (11) anschließen, wenigstens die dem Anfang zugeordnete seitliche Begrenzungswand (12) zumindest in einem sich an das Gehäuse (11) anschließenden Anfangsabschnitt einen für den aus der Auswurföffnung austretenden Luftstrom eine Umlenkung vermeidenden Verlauf hat.

15. Aufnahmevorrichtung nach Anspruch 14, dadurch gekennzeichnet, daß die dem Anfang der Auswurföffnung zugeordnete seitliche Begrenzungswand (12) sich in dem eine Umlenkung vermeidenden Abschnitt sich in Richtung des austretenden Luftstromes erstreckt.

16. Aufnahmevorrichtung nach Anspruch 14 oder 15, dadurch gekennzeichnet, daß der Auswurfkanal (13; 113; 213) einen den Luftstrom umlenkenden Abschnitt aufweist und in diesem Abschnitt eine in der Strömungsrichtung zunehmende Querschnittsfläche hat.

17. Aufnahmevorrichtung nach Anspruch 16, dadurch gekennzeichnet, daß in dem Bereich zunehmender Querschnittsfläche die quer zur Richtung von der einen zur anderen seitlichen Begrenzungswand (12) gemessene Kanalhöhe in Strömungsrichtung zunimmt.

18. Aufnahmevorrichtung nach einem der Ansprüche 14 bis 17, dadurch gekennzeichnet, daß die Auswurföffnung sich in Umfangsrichtung des Radialgebläserades (8; 108; 208) über wenigstens nahezu 180° erstreckt.

19. Aufnahmevorrichtung nach einem der Ansprüche 14 bis 18, dadurch gekennzeichnet, daß die Schaufeln (9) des Radialgebläserades (8; 108; 208) elastisch auf einem Tragkörper (10) angeordnet sind.

20. Aufnahmevorrichtung nach einem der Ansprüche 14 bis 19, dadurch gekennzeichnet, daß die die Schaufeln (9) tragende Seite des Tragkörpers (10) in einer ebenen Fläche, einer konischen Fläche oder einer sphärisch balligen Fläche liegt.

21. Aufnahmevorrichtung insbesondere nach einem der Ansprüche 1 bis 20, dadurch gekennzeichnet, daß dem Radialgebläserad (8; 108; 208) eine Selektionseinrichtung (21; 128) vorgeschaltet ist, welche das nicht zu zerkleinernde Gut von dem zu zerkleinernden Gut trennt.

22. Aufnahmevorrichtung nach Anspruch 21, dadurch gekennzeichnet, daß die Selektionseinrichtung eine Öffnung (19) in der unteren Begrenzungswand des Saugkanals (5) und eine auftreffende Körper gegen diese Öffnung (19) lenkende Prallfläche (18) an der oberen Begrenzungsfläche des Saugkanales (5) aufweist.

23. Aufnahmevorrichtung nach Anspruch 22, gekennzeichnet durch eine verschwenkbare Verschlußklappe (20) für die Öffnung (19) der Selektionseinrichtung.

24. Aufnahmevorrichtung nach einem der Ansprüche 1 bis 23, dadurch gekennzeichnet, daß zusätzlich zu dem Saugkanal (5; 105; 205) ein Blaskanal (6; 106; 206) vorgesehen ist.

25. Aufnahmevorrichtung insbesondere nach einem der Ansprüche 1 bis 24, gekennzeichnet durch
a) wenigstens eine an den Blaskanal (106) angeschlossene Injektoreinrichtung (126'), die dem Saugkanal (105) Luft für einen Injektionssaugbetrieb zuführt,
b) eine verstellbare Klappe (120), die in einer ersten Stellung den Saugkanal (105) zu einem Sammelbehälter (127) hin verschließt und in einer zweiten Stellung den Saugkanal (105) zu dem Sammelbehälter (127) hin freigibt sowie den gesamten Luftstrom des Saugkanals (105) in den Sammelbehälter (127) umlenkt,
c) wenigstens eine verschließbare Lufteinlaßöffnung (129) in einer Seitenwand des Saugkanals (105) in dessen an das Gehäuse (101) angrenzendem Endabschnitt,
d) eine der Lufteinlaßöffnung (129) zugeordnete Schließeinrichtung (130), die in der ersten Stellung der verstellbaren Klappe (120) die Lufteinlaßöffnung (129) freigibt und in der zweiten Stellung die Lufteinlaßöffnung (129) verschließt,
e) ein Steuerglied (116), das in der ersten Stellung der verstellbaren Klappe (120) die Auswurföffnung freigibt sowie die Ausblasöffnung verschlossen hält und in der zweiten Stellung die Auswurföffnung verschließt und die Ausblasöffnung offen hält.

26. Aufnahmevorrichtung insbesondere nach einem der Ansprüche 1 bis 25, dadurch gekennzeichnet, daß
a) zusätzlich zu dem Saugkanal (205) ein wenigstens eine Injektionseinrichtung (226, 226') aufweisender Injektionssaugkanal (236) vorgesehen ist,
b) der Injektionssaugkanal (236) in einen luftdurchlässigen Sammelbehälter (241) mündet,
c) die Injektionseinrichtung (226, 226') an einen zusätzlich zum Saugkanal (205) und zum Injektionssaugkanal (236) vorhandenen Blaskanal (206) angeschlossen ist und
d) der Auswurfkanal (213) zu einem nach außen hin druckdichten Auffangbehälter (222) geführt ist, der einen Luftrückführungskanal (233) aufweist, an den der Blaskanal (206) angeschlossen ist.

27. Aufnahmevorrichtung nach Anspruch 25 oder 26, gekennzeichnet durch eine verstellbare Luftsteuereinrichtung (125; 225, 238) im Blaskanal (106; 206), welche die Blasluft ausschließlich der Injektionseinrichtung (126, 126'; 226, 226'), ausschließlich einer Ausblasöffnung (206') oder teilweise der Injektionseinrichtung (126, 126'; 226, 226') und teilweise der Ausblasöffnung (106', 206') zuführt.

28. Aufnahmevorrichtung nach Anspruch 26 oder 27, dadurch gekennzeichnet, daß der Auffangbehälter (222) als Rucksack ausgebildet ist und über lösbare Schläuche (231, 233) mit dem Auswurfkanal (213) bzw. dem Blaskanal (206) verbunden sind.

29. Aufnahmevorrichtung nach einem der Ansprüche 26 bis 28, gekennzeichnet durch ein Luftfilter (232, 232') zwischen dem Sammelbehälter (222, 222') und dem Blaskanal (206).

30. Aufnahmevorrichtung insbesondere nach einem der Ansprüche 24 bis 29, gekennzeichnet durch eine den Blaskanal (346) vom Saugkanal (345) trennende Wand (350), die in einem der Ansaugöffnung (347) des Saugkanals (345) benachbarten Endabschnitt eine Öffnung (348) aufweist, in welcher verstellbar ein Luftsteuerelement (349) angeordnet ist, mittels dessen die im Blaskanal (346) strömende Luft mit wählbarer Strömungsrichtung in den Saugkanal (345) einleitbar ist, wobei die Strömungsrichtung entweder gegen die Ansaugöffnung (347) oder von dieser weg gerichtet ist.

31. Aufnahmevorrichtung nach Anspruch 30, dadurch gekennzeichnet, daß das Luftsteuerelement (349) um eine parallel zur Trennwand (350) in der Querrichtung des Saugkanals (345) sich erstreckende Achse (351) schwenkbar gelagert ist.

32. Aufnahmevorrichtung nach Anspruch 31, dadurch gekennzeichnet, daß das Luftsteuerelement (349) in einer lotrecht von der Achse (351) durchstoßenden Querschnittsfläche ein äußeres Profil aufweist, das aus dem Vorderteil eines Tragflügelprofils und einer Hohlkehle zusammengesetzt ist, wobei die Hohlkehle an dem von der Ansaugöffnung (347) wegweisenden Ende vorgesehen ist.

33. Aufnahmevorrichtung nach Anspruch 31 oder 32, gekennzeichnet durch Schwenkstellungen des Luftsteuerelementes (349), in denen die Blasluft entlang der Hohlkehle und der konvex gekrümmten Profilnase, nur entlang der Hohlkehle oder der Profilnase oder nur entlang der dem Blaskanal (346) zugekehrten Fläche des Luftsteuerelementes (349) strömt.

34. Aufnahmevorrichtung insbesondere nach einem der Ansprüche 1 bis 33, gekennzeichnet durch eine in den Saugkanal (345) nahe dessen Ansaugöffnung (347) von seiner unteren Begrenzungsfläche (350) her ragende Stützfläche, welche zusammen mit der unteren Begrenzungsfläche (350) einen Sammelraum für Körper (352) bildet, welche aus dem Luftstrom im Saugkanal (345) ausgeschieden worden sind.

35. Aufnahmevorrichtung nach Anspruch 34, dadurch gekennzeichnet, daß die Stützfläche durch die Hohlkehle des Luftsteuerelementes (349) gebildet ist.

36. Aufnahmevorrichtung nach einem der Ansprüche 31 bis 35, dadurch gekennzeichnet, daß das Luftsteuerelement (349) in Richtung der Schwenkachse (351) in wenigstens zwei Abschnitte unterteilt ist, die in unterschiedliche Schwenklagen einstellbar sind.

37. Aufnahmevorrichtung nach einem der Ansprüche 31 bis 36, dadurch gekennzeichnet, daß die Trennwand (350) zwischen dem Saugkanal (345) und dem Blaskanal (346) in einem an die Öffnung (348) angrenzenden Abschnitt eine mit der die Öffnung (348) begrenzenden Kante in den Saugkanal (345) hineinschwenkbare Platte (350') aufweist.

38. Aufnahmevorrichtung nach einem der Ansprüche 1 bis 37, gekennzeichnet durch ein Elektrohandwerkzeug (23) als Antrieb für das Radialgebläserad (8).

39. Aufnahmevorrichtung nach einem der Ansprüche 1 bis 38, gekennzeichnet durch einen Tragbügel (24), der vorzugsweise an der Unterseite des Saugkanals (5) gelagert ist.

## Claims

1. Collection device for waste of all type in the private and industrial area with a radial-fan-wheel to be driven by a motor, that is stored in a housing, which shows itself in scope-direction of the fan-wheel stretching wall an exit-opening, at that itself an exit-canal connects and the radial-fan-wheel as a shredding-tool for through the suction-duct to the fan-wheel reaching waste is built, characterised in that the exit-current-area determinable by the exit-opening is changeable regarding its cross-section-surface and /or its current-direction.

2. Collection device according to claim 1, characterised in at least one control-link (16; 116) for the adjustment of the cross-section-surface and /or the current-direction.

3. Collection device according to claim 2, characterised in that, that with existence of an ejection-opening for shredded material as well as an exit-opening for air by means of the control-link (16, 116) the ejection-opening alternatively is to be released or to be closed and that the control-link (16, 116) with released ejection-opening the exit-opening for air of the housing (11) closes and with closed ejection-opening that exit-opening for air releases.

4. Collection device according to claim 3, characterised in that the ejection-opening and the air-outlet-opening are preferably faced to each other.

5. Collection device according to any one of claims 2 to 4, characterised in that the control-link (16; 116) a hollow-body is, that is stored to rock about a swing-axis (15) and in its one turned-over-position with a first part of its wall the ejection-opening and in its other turned-over-position with a second part of its wall the exit-opening for air closes.

6. Collection device according to claim 5, characterised in that the swing-axis (15) in direction of a diameter of the hollow-body and in the right angle to the running-axis of the radial-fan-wheel (8; 108; 208) proceeds.

7. Collection device according to claim 5, characterised in that the swing-axis proceeds to a diameter of the hollow body outside this diameter at least approximately parallel.

8. Collection device according to any one of claims 5 to 7, characterised in that vertically to the swing-axis one-sidedly outside the fan-wheel and to his rotation-axis at least approximately parallel proceeding an additional swing-axis is intended.

9. Collection device according to any one of claims 3 to 8, characterised in that the control-link (16; 116) is at least in one position lockable.

10. Collection device according to any one of claims 5 to 9, characterised in that the one end of the hollow-body (16; 116) defining border at least in the two turned-over-positions is to be done densely at the inside-wall-surface the radial-fan-wheel (8;108; 208) containing housing (11).

11. Collection device according to any one of claims 3 to 10, characterised in that the control-link forms with a section a shortly before the radial-fan-wheel installed suction-duct a movable unit, that is connected with the remaining part of the suction-duct over a flexible hose airtight.

12. Collection device according to any one of claims 6 to 11, characterised in an a grip-part (3; 103; 203) intended activity-link (17) for the attitude of the control-link (16; 116).

13. Collection device according to any one of claims 3 to 12, characterised by a preferably narrow split between the shovels (9) of the radial-fan-wheel (8; 108; 208) and the inside-surface of the control-link (16;116) in his area serving as part of the housing (11).

14. Collection device according to any one of claims 1 to 13, characterised in that from the two lateral restriction-walls (12) of an ejection-canal (13;113; 213), which itself at them in the rotation-direction of the radial-fan-wheel (8; 108; 208) the start as well as the end of the ejection-opening defining edge-areas of the housing (11) connects, at least the start assigned section of the lateral restriction-wall (12) has at least at the housing (11) the start assigned subsequent initially-section a deviation avoiding course for the from the ejection-opening escaping airflow.

15. Collection device according to claim 14, characterised in that the start assigned section of the lateral restriction-wall (12) of the ejection-opening is stretched itself in a deviation avoiding course in direction of the escaping airflow.

16. Collection device according to claim 14 or 15, characterised in that the ejection-canal (13; 113; 213) shows a section diverting the airflow and has in this section in current-direction an increasing cross-section-surface.

17. Collection device according to claim 16, characterised in that in the area of increasing cross-section-surface the crosswise to the direction from the one to the other restriction-wall (12) measured canal-height in current-direction increases.

18. Collection device according to any one of claims 14 to 17, characterised in that the ejection-opening itself in scope-direction of the radial-fan-wheel( 8; 108; 208) is extended over at least nearly 180°.

19. Collection device according to any one of claims 14 to 18, characterised in that the shovels (9) of the radial-fan-wheel (8; 108; 208) are fixed elastically on a fundamental body (10).

20. Collection device according to any one of claims 14 to 19, characterised in that the shovels (9) supporting fundamental side of the body (10) lies in an even surface, a conic surface or a spherically bent surface.

21. Collection device especially according to any one of claims 1 to 20, characterised in that the radial-fan-wheel (8; 108; 208) a selection-equipment (21; 128)) is connected in series, which separates the not shredding-able waste from the shredded waste.

22. Collection device according to claim 21, characterised in that the selection-equipment shows an opening (19) in the low wall of the suction-duct (5) and a surface (18) at the upper wall of the suction-duct (5), with what objects, that on the surface (18) impacts, are steered to the opening (19).

23. Collection device according to claim 22, characterised in a swivelling closing-flap (20) for the opening (19) of the selection-equipment.

24. Collection device according to any one of claims 1 to 23, characterised in that additionally to the suction-duct ( 5; 105; 205), a blowing-duct ( 6; 106; 206) is intended.

25. Collection device according especially to any one of claims 1 to 24, characterised in that,
a) at least one at the blowing-duct (106) connected injection-device (126'), that supplies the suction-duct (105) with air for an injection-suction-business,
b) an adjustable flap (120), that in a first position the suction-duct (105) to a collective-receptacle (127) closes and releases the suction-duct (105) to the collective-receptacle (127) in a second position as well as the entire airflow of the suction-duct (105) into the collective-receptacle (127) diverts,
c) at least one lockable admission-opening for air (129) in a side-wall of the suction-duct (105) in his at the housing (101) adjoining final-section,
d) a the admission-opening for air (129) assigned closing-equipment (130), that in the first position of the adjustable flap (120) the admission-opening for air (129) releases and in the second position the admission-opening for air (129) closes,
e) a control-link (116), that in the first position of the adjustable flap (120) the ejection-opening releases as well as the exit-opening for air keeping closed and in the second position the ejection-opening closes and the air-exit-opening keeps open.

26. Collection device according especially to any of claims 1 to 25, characterised in that,
a) additionally to the suction-duct (205) an at least one injection-equipment (226; 226 ') showing injection-suction-duct (236) is intended,
b) the injection-suction-canal (236) leads into a collective-receptacle (241), which is permeable to air,
c) the injection-equipment (226; 226') at an additionally to the suction-duct (205) and to the injection-duct (236) existing blowing-duct (206) is connected and,
d) the ejection-canal (213) to one outwardly pressure-tight receptacle to snatch waste (222) is led, that an air-repatriation-canal (233) shows, at which the blowing-duct (206) is connected.

27. Collection device according to claim 25 or 26, characterised in an adjustable air-control-equipment (125; 225; 238) in the blowing-duct (106; 206), which supplies the blown air exclusively that injection-equipment(126; 126'; 226; 226 '), exclusively an exit-opening for blowing-air (206 ') or partially that injection-equipment (126; 126'; 226; 226') and partially the exit-opening for blowing-air (106'; 206').

28. Collection device according to claim 26 or 27, characterised in that the receptacle to snatch waste (222) likes an backpack and is interconnected with the ejection-canal(213) as well as with the blowing-duct (206) by means of solvable hoses (231; 233).

29. Collection device according to any one of claims 26 to 28, characterised in an air-filter (232; 232 ') between the collective-receptacle (222; 222 ') and the blowing canal (206).

30. Collection device according especially to any one of the claims 24 to 29, characterised in a wall (350) separating the blowing duct (346) from the suction-canal (345), that shows in one of the take-in-inlet (347) neighboring final section of the suction-duct (345) an opening (348), in which an air-control-element (349) assembled is, by means of it the streaming air in the blowing-duct (346) is to pass on with selectable current-direction into the suction-duct (345) so, that the current-direction is either adjusted against the suction-opening (347) or from this away.

31. Collection device according to claim 30, characterised in that the air-control-element (349) about one parallel to the divider (350) in the cross-direction of the suction-duct (345) itself stretching axis (351) is stored rockable.

32. Collection device according to claim 31, characterised in that the air-control-element (349) in one perpendicular from the axis (351) piercing cross-section-surface an outer profile shows, that from the front part of a profile analogical an airplane-wing and a hollow-throat composite is, with which the hollow-throat is intended from the end of the suction-opening (347) away.

33. Collection device according to claim 31 or 32, characterised in turn-over-positions of the air-control-element (349), in which the blown air along the hollow-throat and the convex moulded profile-nose, only along the hollow-throat or the profile-nose or only along that the blowing-duct (346) turned towards surface of the air-control-element (349) streams.

34. Collection device according especially to any one of claims 1 to 33, characterised in one into the suction-duct (345) near his take-in-inlet (347) of its low restriction-surface (350) ago sticking out supporting surface, which together with the low restriction-surface (350) a collective-area for bodies (352) forms, which are excreted from the airflow in the suction-duct (345).

35. Collection device according to claim 34, characterised in that the supporting surface is built by the hollow-throat of the air-control-element (349).

36. Collection device according to any one of claims 31 to 35, characterised in that the air-control-element (349) is subdivided in direction of the swing-axis (351) into at least two sections, that are adjustable in different swing-situations.

37. Collection device according to any one of claims 1 to 36, characterised in that the divider (350) between the suction-canal (345) and the blowing canal (346) in one at the opening (348) adjoining section one with the opening (348) restricting edge into the suction-canal (345) a turn-in-able plate (350') shows.

38. Collection device according to any one of claims 1 to 37, characterised in an electro-craft-stuff (23) as drive for the radial-fan-wheel (8).

39. Collecting device according to any one of claims 1 to 38, characterised in an element to carrying (24), that is stored preferably at the underside of the suction-duct (5).

## Revendications

1. Dispositif collecteur pour déchets de toute la sorte dans le domaine privé et professionnel avec une, par commande d'un moteur, roue de ventilateur radiale, qui est disposé dans une boîte, qui se montre dans un dans la direction de périmètre de la roue de ventilateur de mur s'étendre orifice de sortie et suivant attaché un canal de sortie, à que la roue de ventilateur radiale est formée comme l'outil de broyage pour le déchets parvenant par le canal aspirant, caractérisé en ce que le domaine de courant déterminé par l'orifice de sortie est variable à propos de sa surface de coupe transversale et /ou sa direction de courant.

2. Dispositif collecteur selon la revendication 1, caractérisé par au moins un unité de contrôle (16; 116) pour l'attitude de la surface de coupe transversale et / ou la direction de courant.

3. Dispositif collecteur selon la revendication 2, caractérisé en ce que, à la présence d'une orifice de crachat pour le matériau haché ainsi q' un orifice de sortie d'air, au moyen de l'unité de contrôle (16, 116) l'orifice de crachat facultativement est à ouvrir et à fermer, et que l'unité de contrôle (16, 116) à l'orifice de crachat libérée l'orifice de sortie d'air de la boîte (11) ferme et à l'orifice de crachat fermée ceci l'orifice de sortie d'air libère.

4. Dispositif collecteur selon la revendication 3, caractérisé en ce que ceci orifice de crachat et l'orifice de sortie d'air sont de préférence se vis-à-vis disposé.

5. Dispositif collecteur selon l'une quelconque des revendications 2 a' 4, caractérisé en ce que l'unité de contrôle (16; 116) un corps vide est, ceci à un axe pivotant (15) basculant campé est et dans son un position basculée avec une première partie de son mur l'orifice de crachat et dans son autre position basculée avec une deuxième partie de son mur l'orifice de sortie d'air ferme.

6. Dispositif collecteur selon la revendication 5, caractérisé en ce que l'axe pivotant (15) dans la direction d'un diamètre du corps vide et dans l'angle droit à l'axe de tournure de la roue de ventilateur radiale (8; 108: 208) se déroule.

7. Dispositif collecteur selon la revendication 5, caractérisé en ce que l'axe pivotant pour le moins à-peu-près parallèlement à un diamètre le à corps vide à l'extérieur de ce diamètre se déroule.

8. Dispositif collecteur selon l'une quelconque des revendications 5 a' 7, caractérisé en ce qu'un axe pivotant additionnel est prévu pour le moins à-peu-près parallèlement se déroulant unilatéralement verticalement à l'axe de panoramique à l'extérieur de la roue de ventilateur et à son axe rotatif.

9. Dispositif collecteur selon l'une quelconque des revendications 3 à 8, caractérisé en ce que l'unité de control (16; 116) est de fixer au moins dans une position.

10. Dispositif collecteur selon l'une quelconque des revendications 5 à 9, caractérisé en ce que ceci l'une fin du corps vide (16; 116) bord définissant pour le moins dans les deux positions basculées dense à la surface de paroi le la roue de ventilateur radiale (8; 108; 208) boîte contenant (11) colle.

11. Dispositif collecteur selon l'une quelconque des revendications 3 à 10, caractérisé en ce que l'unité de contrôle avec une section un succinctement devant le vélo de ventilateur radial de canal aspirant étant forme une unité mobile, qui est hermétiquement couplée avec la partie restante du canal aspirant sur un tuyau flexible.

12. Dispositif collecteur selon l'une quelconque des revendications 6 a' 11, caractérisé par un à une partie de poignée (3; 103; 203) prévu unité d'occupation (17) pour l'attitude de l'unité de contrôle ( 16; 116).

13. Dispositif collecteur selon l'une quelconque des revendications 3 à 12, caractérisé par une fente de préférence étroite entre les pelles (9) de la roue de ventilateur radiale (8 ; 108 ; 208) et la surface intérieure de l'unité de contrôle (16; 116) dans son comme partie de la boîte (11) servant domaine.

14. Dispositif collecteur selon l'une quelconque des revendications 1 à 13, caractérisé en ce que de les deux murs de délimitation latéraux (12) d'un canal de crachat (13; 113; 213), qui s'à la dans la direction de course de la roue de ventilateur radiale (8; 108; 208) le début ou la fin de l'orifice de crachat domaines de bord définissant de la boîte (11) attache, au moins le latéral mur de délimitation adjoint le début (12), pour le moins dans un s'à la boîte (11) attache la section d'abord un pour le de l'orifice de crachat part le courant un détournement cours évitant a.

15. Dispositif collecteur selon la revendication 14, caractérisé en ce que le début de l'orifice de crachat adjoint latéral mur de délimitation (12), se dans lui un détournement évitant section s' étendu dans la direction du courant sortant.

16. Dispositif collecteur selon la revendication 14 ou la revendication 15, caractérisé en ce que le canal de crachat (13; 113; 213) montre une section faisant tourner le courant, et, dans cette section, une surface de coupe transversale augmentant dans la direction de courant a.

17. Dispositif collecteur selon la revendication 16, caractérisé en ce que dans le domaine la surface de coupe transversale augmentant, la hauteur de canal mesurée de travers à la direction de l'un à l'autre mur de délimitation latéral (12) dans la direction de courant augmente.

18. Dispositif collecteur selon l'une quelconque des revendications 14 à 17, caractérisé en ce que l'orifice de crachat se dans la direction de périmètre de la roue de ventilateur radiale ( 8; 108; 208) sur au moins presque 180° étend.

19. Dispositif collecteur selon l'une quelconque des revendications 14 à 18, caractérisé en ce que les pelles (9) à la roue de ventilateur radiale ( 8; 108 ; 208) sont élastique disposées sur un corps portant (10).

20. Dispositif collecteur selon l'une quelconque des revendications 14 à 19, caractérisé en ce que le côté du corps (10) portant les pelles ( 9) est dans une surface plate, une surface conique ou une surface de façon sphérique crochue.

21. Dispositif collecteur surtout selon l'une quelconque des revendications 1 à 20, caractérisé en ce que la roue de ventilateur radiale ( 8; 108; 208) est raccordé un aménagement de sélection (21; 128), quel pas de déchets broyage-capables de déchets broyée sépare.

22. Dispositif collecteur selon la revendication 21, caractérisé en ce que l'aménagement de sélection un orifice (19) dans le mur inférieur du canal aspirant (5) et une surface (18) au mur supérieur du canal aspirant (5) montre, à quoi les objets, qui heurtent sur la surface (18), sont conduits à l'orifice (19).

23. Dispositif collecteur selon la revendication 22, caractérisé par un clapet orientable (20), au fait de fermer l'orifice (19) l'aménagement de sélection.

24. Dispositif collecteur selon l'une quelconque des revendications 1 à 23, caractérisé en ce qu'additionnel au canal aspirant (5; 105; 205) un canal au soufflage (6; 106; 206) prévu est.

25. Dispositif collecteur surtout selon l'une des revendications 1 a' 24, caractérisé en ce que
a) au moins un au canal au soufflage (106) aménagement d'injecteur connecté (126'), qu'amène au canal aspirant (105) air pour une injection aspirant exploitation,
b) un clapet ajustable (120), quel dans une première position le canal aspirant (105) à un réservoir collectif (127) ferme, et libère le canal aspirant (105) au réservoir collectif (127) dans une deuxième position ainsi fait tourner le courant total du canal aspirant (105) dans le réservoir collectif (127),
c) au moins un orifice d'entrée d'air (129) fermable pour dans une paroi du canal aspirant (105) dans son à la boîte (101) section finale avoisinant,
d) un l'orifice d'entrée d'air (129) aménagement adjoint (130) au fait de fermer, que dans la première position de l'ajustable clapet (120) l'orifice d'entrée d'air (129) libère, et dans la deuxième position l'orifice d'entrée d'air (129) ferme,
e) une unité de contrôle (116), que dans la première position de l'ajustable clapet (120) l'orifice de crachat libère dès que l'orifice de sortie d'air a fermé s'arrête et dans la deuxième position l'orifice de crachat ferme et l'orifice de sortie d'air s'arrête ouvertement.

26. Dispositif collecteur surtout selon l'une quelconque des revendications 1 a' 25, caractérisé en ce que
a) additionnel au canal aspirant (205) un au moins un l'aménagement d'injection (226; 226 ') injection aspirant canal montrant (236) prévu est,
b) l'injection aspirant canal (236) dans un réservoir collectif (241) poreux débouche,
c) l'aménagement d'injection ( 226; 226 ') à un additionnel au canal aspirant (205) et au canal d'injection (236) canal disponible au soufflages (206) è connecté est et,
d) le canal de crachat (213) trop un en dehors pression-rend étanche des réservoirs au captage des déchets (222) conduit est, qu'un le canal de rapatriement d'air (233) montre, à que le canal au soufflage (206) connecté est.

27. Dispositif collecteur selon la revendication 25 ou la revendication 26, caractérisé par un aménagement de gouvernail d'air ajustable (125; 225; 238) dans le canal au soufflage (106; 206), qui amène l'air soufflé exclusivement ceci l'aménagement d'injection (126; 126'; 226; 226') exclusivement un l'ouverture au fait de souffler l'air (206 ') ou partiellement ceci l'aménagement d'injection (126; 126 '; 226; 226 ') et partiellement l'orifice au fait de souffler l'air (106 206').

28. Dispositif collecteur selon la revendication 26 ou la revendication 27, caractérisé en ce que le réservoir au captage (222) est formé comme le sac à dos et est conjoint sur tuyaux solubles (231, 233) avec lui canal de crachat (213) ou le canal au soufflage (206).

29. Dispositif collecteur selon l'une quelconque des revendications 26 a' 28, caractérisé par un filtre d'air ( 232; 232 ') entre le réservoir collectif ( 222; 222 ') et le canal au soufflage (206).

30. Dispositif collecteur surtout selon l'une quelconque des revendications 24 a' 29, caractérisé par un mur (350) le canal au soufflage (346) du canal aspirant (345) séparant, que montre dans un de l'orifice d'aspirant (347) voisine section finale du canal aspirant (345) un orifice (348), dans quel variablement un élément de control d'air (349) disposé est, au moyen l'air affluant dans le canal au soufflage (346) avec la direction de courant éligible dans le canal aspirant (345) dedans maniable est, à quoi la direction de courant contre l'orifice aspirante (347) ou de celui-ci disparu dirigé est.

31. Dispositif collecteur selon la revendication 30, caractérisé en ce que l'élément de control d'air (349) à un parallèle à la cloison (350) dans la direction transversale du canal aspirant (345) s'axe s'étendre (351) orientable campé est.

32. Dispositif collecteur selon la revendication 31, caractérise en ce que l'élément de control d'air (349) montre dans un perpendiculaire de l'axe (351) surface de coupe transversale perçant un profil extérieur, qu'est assemblé de l'avant-train d'une chape avion-aile-approchante et une gorge vide, à quoi la gorge vide est prévue opposé de l'orifice aspirante (347).

33. Dispositif collecteur selon la revendication 31 ou la revendication 32, caractérisé par positions pivotables de l'élément de control d'air (349), dans que ceci l'air soufflé afflue le long la gorge et le nez de profil formé convexe, seulement le long de la gorge vide ou le nez de profil, ou seulement le long de ceci le canal au soufflage ( 346) tournée surface de l'élément de control d'air (349).

34. Dispositif collecteur surtout selon l'une quelconque des revendications 1 à 33, caractérisé par un dans le canal aspirant (345) près son orifice d'admission (347) de sa surface de délimitation inférieure (350) s'élever surface soutenant et, qui avec l'inférieur surface de délimitation (350) forme un espace collectif pour les corps (352), quel du courant dans le canal aspirant 345 est sécrété.

35. Dispositif collecteur selon la revendication 34, caractérisé en ce que la surface soutenant est cultivé par la gorge vide de l'élément de control d'air (349).

36. Dispositif collecteur selon l'une quelconque des revendications 31 a' 35, caractérisé en ce que l'élément de control d'air (349) est subdivisé dans direction de l'axe de panoramique (351) dans au moins deux sections, qui sont ajustables dans les situations de panoramique différentes.

37. Dispositif collecteur selon l'une quelconque des revendications 31 à 36, caractérisé en ce que la cloison (350) entre le canal aspirant (345) et le canal au soufflage (346) montre dans un à l'orifice (348) section limitrophe un avec lui orifice (348) limitant bord dans le canal aspirant (345) dedans-orientable (350') plaque.

38. Dispositif collecteur selon l'une quelconque des revendications 1 a' 37, caractérisé par des choses de métier dans l'industrie électrique (23) comme la commande pour la roue de ventilateur radiale (8).

39. Dispositif collecteur selon l'une quelconque des revendications 1 a' 38, caractérisé par un élément courbe à portage (24), qui est de préférence campé au dessous du canal aspirant (5).
